# EUROPEAN PATENT SPECIFICATION

(11) **EP 1 958 427 B1**
(45) Date of publication and mention of the grant of the patent: **22.02.2012**
(21) Application number: 06844907.3
(22) Date of filing: 07.12.2006
(51) Int. Cl.: H04M 1/725, G06F 21/00

(54) **METHOD AND APPARATUS FOR AUTHENTICATING A MOBILE PHONE ACCESSORY**
VERFAHREN UND VORRICHTUNG ZUR AUTHENTIFIZIERUNG EINES MOBILTELEFONZUBEHÖRS
PROCEDE ET APPAREIL PERMETTANT D'AUTHENTIFIER UN ACCESSOIRE DE TELEPHONE MOBILE

(30) Priority: 08.12.2005 US 297077
(43) Date of publication of application: 20.08.2008
(73) Proprietor: Kyocera Corporation, Kyoto 612-8501 (JP)
(72) Inventor: PIERONEK, James, V., San Diego, CA 92121 (US); TAYLOR, John, P., San Diego, CA 92121 (US)
(74) Representative: Viering, Jentschura & Partner
(86) International application number: PCT/US2006/046580
(87) International publication number: WO 2007/067638

(56) References cited:
- WO-A-03/073688
- US-A1- 2003 101 378
- US-A1- 2004 043 792
- US-A1- 2005 050 325
- US-A1- 2005 101 316
- MENEZES A ET AL: "Handbook of Applied Cryptography , IDENTIFICATION AND ENTITY AUTHENTICATION" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 385-424, XP002262234 ISBN: 0-8493-8523-7

## Description

### FIELD OF THE INVENTION

The present invention relates to the field of wireless communication devices. More specifically, the invention relates to wireless communication device accessories and related methods of use.

### BACKGROUND OF THE INVENTION

Various peripheral devices, generally referred herein to as "accessories," may be attached and detached from mobile phones, and other wireless communication devices. These accessories, when attached, provide additional functionality and/or otherwise enhance the performance of the phone. In other cases, accessories facilitate the user's ability to productively or comfortably use the mobile phone. A phone battery, though normally thought of as integral with a phone, is also considered an "accessory" for purposes of the present disclosure.

During the design and development of wireless communication devices, it is common to test the compatibility and/or reliability of accessories anticipated for use with the wireless communication device. Such testing ensures that an accessory will operate with a reasonable level of compatibility with the wireless communication device. Unfortunately, accessories made available by third parties for use with wireless communication devices are often not tested or, even if tested, fall below the standards defined by manufacturers of wireless communication devices and/or other standards, e.g., defined by government bodies. Such accessories (referred to herein as "unauthorized accessories") have the capability of damaging the wireless communication device and/or pose a safety threat to a consumer.

Existing techniques for preventing unauthorized accessories to be employed with wireless communication devices have been relatively easy to circumvent. For example, connectors employing unique mechanical keying arrangements can be overcome with mechanical modifications to the connectors. Electrical arrangements employing resistors for authentication are likewise easily circumvented with appropriate circuitry. Finally, digital communication techniques employing fixed passwords or rolling codes are relatively easy to defeat or mimic.

US 2005/050325 A1 and US 2005/101316 A1 disclose authentication systems for determining whether an appropriate external device is attached to a main device, wherein the external and the main devices contain the same encryption algorithm or authentication code.

WO 03/073688 A discloses methods for authenticating hardware devices that store digital certificates certifying the authenticity of the hardware devices and any signals originating therefrom.

Menezes a et al: "Identification and Entity Authentication", Handbook of Applied Cryptography, 1997, pages 385-424, discloses identification schemes involving fixed passwords, weak authentications such as one-time passwords schemes, and strong authentication such as challenge-response protocols based on symmetric and public-key techniques.

Accordingly, there remains a strong need in the art for an effective and secure authentication method and apparatus for wireless communication devices.

### SUMMARY OF THE INVENTION

The present invention provides a method for authenticating a phone accessory for a mobile phone according to claim 1, and a system for authenticating a phone accessory for a mobile phone as defined in claim 8. Further embodiments of the invention are described in the respective dependent claims. Thus, a method and apparatus for authenticating a mobile phone accessory is disclosed. According to one embodiment, the mobile phone and the accessory are capable of being coupled for communication over a first line via an interface.

In an exemplary embodiment, the mobile phone computes a challenge communication, such as a random number or pseudo random number, and transmits the challenge communication over the first line to the accessory. In response, the accessory receives the challenge communication over the first line, and computes a response communication based on the challenge communication, a hash algorithm and an electronic key. The response communication is transmitted over the first line to the mobile phone. In some embodiments, the accessory also optionally enables the phone accessory for use with the mobile phone, such as by making the requisite electrical connections, for example.

The response communication generated by the accessory is received by the mobile phone over the first line. The mobile phone computes a validation result based on the challenge communication, a hash algorithm and an electronic key. The mobile phone compares the response communication with the validation result, and enables the phone accessory for use with the mobile phone based on the comparison of the response communication with the validation result. In the case where the accessory is authorized for use with the mobile phone, the response communication generated by the accessory will match the validation result, and the accessory is enabled for use with the mobile phone. Otherwise, the accessory is not enabled for use with the mobile phone.

As discussed below, the particular mobile phone accessory authentication arrangement and technique disclosed herein result in significantly Improved security, thereby significantly reducing the misuse of unauthorized accessories with mobile phones.

Other features and advantages of the present invention will become more readily apparent to those of ordinary skill in the art after reviewing the following detailed description and accompanying drawings.

### BRIEF DESCRIPTION OF THE DRAWINGS

Figure 1 illustrates an exemplary mobile phone and accessory according to one embodiments of the present invention.
Figure 2 illustrates an exemplary mobile phone and accessory according to one embodiment of the present invention.
Figure 3 illustrates a flow chart depicting an exemplary method for authenticating a mobile phone accessory according to one embodiment of the present invention.

### DETAILED DESCRIPTION OF THE INVENTION

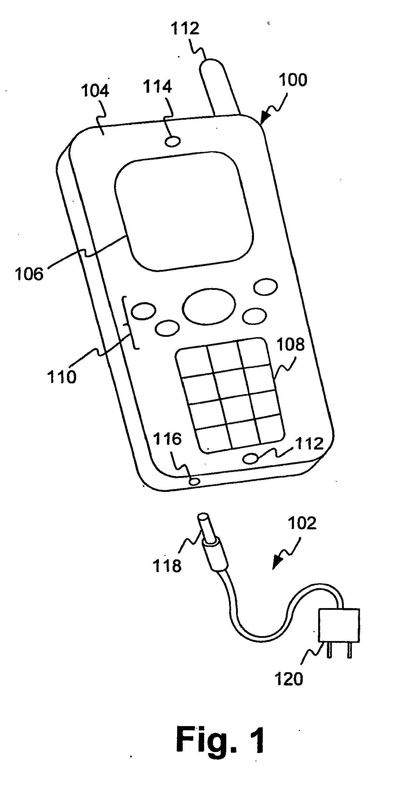

Referring first to Figure 1, there is shown mobile phone 100 and mobile phone accessory 102 capable of being connected to mobile phone 100 according to one embodiment of the invention. Mobile phone 100 may be any wireless communication device capable of transmitting and receiving electromagnetic ("EM") energy in the radio frequency ("RF") band via an antenna coupled to the transceiver. Although the exemplary authentication method described herein is carried out by a mobile phone device for authenticating a mobile phone accessory, the method can also be used to authenticate battery packs or accessories for video cameras, notebook computers, iPods, and other electronic devices.

Although not shown in Figure 1 for ease of illustration, mobile phone 100 typically includes a processor coupled to a memory enclosed within housing 104 for carrying out a number of functions related to operating mobile phone 100. The processor is further coupled to a transceiver for communication RF signals via antenna 112. A power supply, such as a battery, supplies power to the processor, memory, transceiver, and other mobile phone 100 components.

Mobile phone 100 further includes a number of input/output ("I/O") devices for receiving and transmitting information to the user. For example, mobile phone 100 includes display 106, keys 108 and 110, microphone 112 and speaker 114, each typically coupled to the processor via an appropriate I/O interface.

Continuing with Figure 1, mobile phone 100 further includes one or more accessory interfaces for connecting an accessory to the mobile phone 100. Although the techniques described herein may be used with a wide variety of accessories and accessory interfaces, Figure 1 illustrates an example arrangement involving power adapter accessory 102 having charging unit 120 connected to mobile phone interface 1'18. The mobile phone interface 118 is capable of being connecting to accessory interface 116 of mobile phone 100.

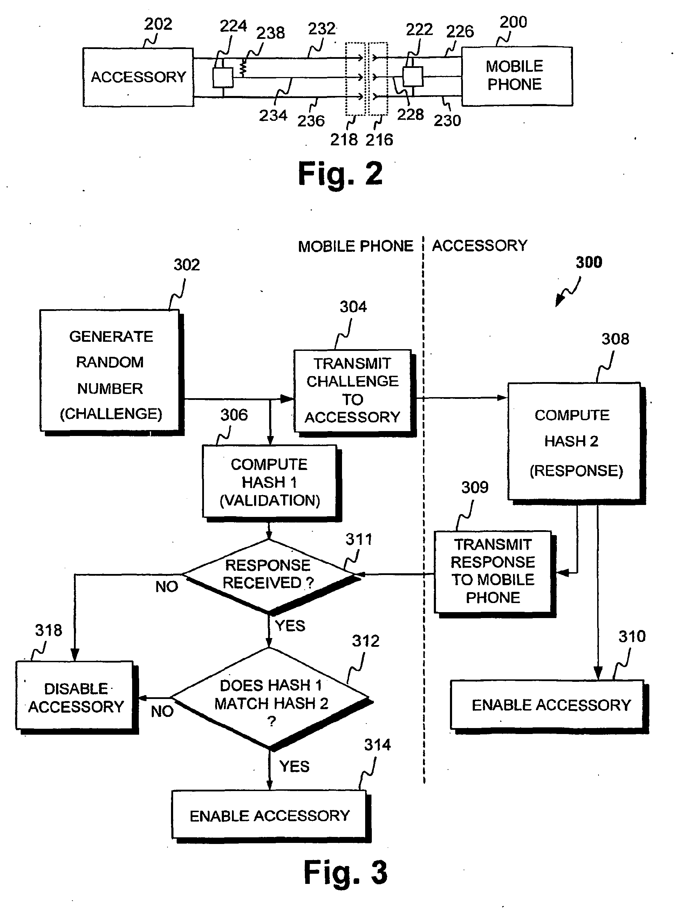

Referring now to Figure 2, there is shown a simplified block diagram illustrating mobile phone 200 connected to accessory 202 according to one embodiment of the invention. For example, mobile phone 200, accessory interface 216, accessory 202, and mobile phone interface 218 in Figure 2 may correspond to mobile phone 100, accessory interface 116, accessory 102, and mobile phone interface 118, respectively, in Figure 1.

As shown in Figure 2, accessory interface 216 of mobile phone 200 includes lines 226 228 and 230, and mobile phone interface 218 of accessory 202 includes lines 232, 234 and 236. By way of illustration, when mobile phone 200 and accessory 202 are connected, line 226 may be connected to line 232 for providing a supply voltage, line 230 may be connected to line 236 for providing a reference voltage, e.g., such as ground, and line 228 may be connected to line 234 for providing bi-directional communication between mobile phone 200 and accessory 202.

According, to another embodiment, signaling lines 228 and 234 may be omitted, and, thus, communication as described herein over lines 228 and 234 may be carried out over supply voltage lines 226 and 232, respectively. For example, bi-directional signaling may be employed over lines 226 and 232 via modulation over lines 226 and 232. As another example, bi-directional signaling may be employed over lines 226 and 232 by employing switches to enable lines 226 and 232 to operate in a first bi-directional signaling mode during the authentication process and to enable lines 226 and 2,32 to operate in a second voltage supplying mode after accessory 202 is authenticated. A benefit of enabling communication over existing supply voltage lines 226 and 232 is that dedicated communication lines 228 and 234 is not required, and thus, the interface and connectors between the mobile phone 200 and accessory 202 need not be modified from previous arrangements that do not employ the authentication method described herein.

Continuing with Figure 2, processor 222 of mobile phone 200 is connected to lines 226, 228 and 230 of interface 216, and processor 224 of accessory 202 is connected to lines 232, 234 and 236. Processor 222 may be the main processor of mobile phone 200 or may be an auxiliary processor within mobile phone 200. Resistive element 238 is connected across lines 232 and 234 to provide an appropriate impedance to mobile phone 200. The operations of processors 222 and 224 to authenticate accessory 202 will now be described in conjunction with Figure 3.

Figure 3 depicts flowchart 300 illustrating a method for authenticating a mobile phone accessory according to one embodiment of the invention. Certain details and features have been left out of flow chart 300 of Figure 3 that are apparent to a person of ordinary skill in the art. For example, a step may consist of one or more sub-steps, as known in the art. While steps 302 through 318 shown in flow chart 300 are sufficient to describe one embodiment of the present invention, other embodiments of the invention may utilize steps different from those shown in flow chart 300.

According to one embodiment, the method of flow chart 300 is initiated when an accessory is connected to a mobile phone, e.g., when accessory 202 in Figure 2 is connected to mobile phone 200. At block 302, processor 222 senses the connection of accessory 202 and generates a challenge communication. According to one embodiment, the challenge communication is a string of digits comprising a random number. For example, the challenge communication may be a 64-bit random number having more than 18 quintillion (18,000,000,000,000,000,000) possible values. The challenge response can also be a pseudo random number that may be unique for each mobile phone for each authenticating event. For example, the pseudo random number may be based on the mobile phone's electronic serial number ("ESN") and a counter incremented on every authentication attempt.

At block 304, the challenge communication is transmitted from the mobile phone to the accessory for processing. For example, in Figure 2, the challenge communication is transmitted by processor 222 to processor 224 via lines 228 and 234.

At block 306, processor 222 of mobile phone 200 computes a first hash value ("Hash 1") based on the challenge communication generated during block 302. Hash 1 may be generated by a first hash algorithm employing a first electronic key, and further using the challenge communication as its input data. For example, the first hash algorithm may be a one-way hash algorithm. In general, for every unique input string, a different output string is produced. For purposes of the present disclosure, Hash 1 is referred to as a validation result, which is used to compare against a response communication generated by an accessory for authenticating the accessory, as discussed below.

At block 308, processor 224 of accessory 202 receives the challenge communication transmitted during block 304 and computes a second hash value ("Hash 2") based on the received challenge communication. Hash 2 is also known as a response communication, since Hash 2 is generated in response to the received challenge communication. Like Hash 1, Hash 2 may be generated by a second hash algorithm employing a second electronic key, and further using the challenge communication as its input data. In a case where accessory 202 is authorized for use with mobile phone 200, the second hash algorithm and/or the second electronic key would be supplied to the manufacturer of accessory 202 for storage in a memory used by processor 224 during the authentication process. As such, Hash 2, generated by the second hash algorithm and the second electronic key, can be authenticated by mobile phone 200, as discussed below. Unauthorized accessories, lacking either the second hash algorithm or the second electronic key would fail to generate the requisite Hash 2 for proper authentication, also discussed below.

At block 309, Hash 2 is transmitted by the mobile accessory to the mobile phone for processing. For example, in Figure 2, the Hash 2 is transmitted by processor 224 to processor 222 via lines 234 and 228. As discussed below, authentication by mobile phone 200 is still required before accessory 202 is completely enabled for operation with mobile phone 200. Upon validating accessory 202, mobile phone 200 may allow certain portions of mobile phone 200 to communicate with or otherwise utilize accessory 202. Mobile phone 20 may command the accessory to change its configuration or connection (represented by block 310) or may cause the configuration to occur in mobile phone 20 (represented by block 314 as discussed below).

At decision block 311, a determination is made as to whether processor 222 has or has not received a response communication (Hash 2) from accessory 202. By way of illustration, Processor 222 will not receive a response communication where accessory 202 is not configured to transmit the response communication in response to the challenge communication transmitted during block 304. In such case, accessory 202 is considered unauthorized, and mobile phone 200 disables accessory 202 from operating with mobile phone 200 at step 318, as discussed below. If a response communication is received, method 300 continues to decision block 312.

At decision block 312, processor 222 has received the response communication (Hash 2) from processor 224 and compares Hash 1 generated during block 306 with Hash 2 received from accessory 202. In the case where accessory 202 is an authorized accessory, Hash 1 will match Hash 2, in which case processor 222 enables accessory 202 for operation with mobile phone 200 at step 314. As discussed above, upon validating accessory 202, mobile phone 200 may allow certain portions of mobile phone 200 to communicate with or otherwise utilize accessory 202. Mobile phone 20 may command the accessory to change its configuration or connection (represented by block 310) or may cause the configuration to occur in mobile phone 20 (represented by block 314 as discussed below). By way of illustration, enabling accessory 202 may involve, among other things, providing the requisite electrical connections, e.g., via lines 226 and 230 to mobile phone components of mobile phone 200. Accessory 202 is thereby authenticated and is enabled for use with mobile phone 200. In the case where accessory 202 is not an authorized accessory, Hash 1 will not match Hash 2, in which case processor 222 disables accessory 202 from operating with mobile phone 200 at step 318. For example, disabling accessory 202 can be carried out by preventing line 226 and/or line 230 of accessory interface 216 from connecting to respective mobile phone components of mobile phone 200.

When an accessory is disabled, a message may be communicated to the user, e.g., via a display message or audible message, to indicate that the accessory is not compatible with the mobile phone. Other appropriate messages may further include a warning that the accessory may damage the mobile phone.

Due to the particular arrangement and operation of mobile phone 200 and accessory 202, authentication of accessories for use with mobile phone 200 is significantly improved. For example, the hashing functions and the challenge and response technique employed in method 300 are extremely difficult and expensive to analyze and undermine. As a result, the ability for an unauthorized manufacturer of accessories to bypass the authentication arrangement of mobile phone 200 is significantly reduced. Benefits are realized by manufacturers of mobile phone 202, since use of unauthorized accessories which may damage mobile phone 202 is significantly reduced. In addition, users of the mobile phone 202 are benefited since the reduced likelihood for damage will result in reducing the loss of usage of the mobile phone during the repair period.

According to another embodiment of the invention, the processes associated with blocks 302 and 306 of method 300 depicted in Figure 3 are replaced by one or more "challenge-response" pairs which are stored in memory on the mobile phone. According to this particular embodiment, the challenge communication need not be generated at block 302. Instead, the challenge component of a challenge-response pair is transmitted to the accessory at block 304. The accessory processes the challenge communication as discussed above in connection with block 308 of Figure 3 and transmits the "Hash 2" response as discussed above in connection with block 309. According to this particular embodiment, the "Hash 1" validation result need not be generated at block 306. Instead the response component of the associated challenge-response pair (transmitted at block 304) may be used as the "Hash 1" validation result for comparison at block 312 as discussed above. Furthermore, according to this particular embodiment, each mobile phone will have unique or substantially unique challenge-response pair(s). By way of example, the unique or substantially unique challenge-response pair(s) may be provisioned when customers receive their product and are assigned an ESN. The benefit of this particular approach is that the encryption algorithm need not be stored on the mobile phone, where the algorithm could be illegitimately acquired for producing counterfeit accessories. Since the challenge-response pair(s) assigned to mobile phones are unique or substantially unique, even if a counterfeiter were to analyze the protocol of a particular mobile phone to mimic the response generated by an authorized accessory for authentication, the counterfeiter would be limited to making accessories for only that particular mobile phone, thereby rendering the ability of a counterfeiter to produce counterfeit accessories impractical.

From the above description of exemplary embodiments of the invention, it is manifest that various techniques can be used for implementing the concepts of the present invention without departing from its scope. Moreover, while the invention has been described with specific reference to certain embodiments, a person of ordinary skill in the art would recognize that changes could be made in form and detail without departing from the scope of the invention as defined by the claims. The described exemplary embodiments are to be considered in all respects as illustrative and not restrictive. It should also be understood that the invention is not limited to the particular exemplary embodiments described herein, but is capable of many rearrangements, modifications, and substitutions without departing from the scope of the invention as defined by the claims.

## Claims

1. A method for authenticating a phone accessory (202) for a mobile phone (200), the method **characterized by**
assigning a first unique challenge-response pair of a plurality of unique challenge-response pairs to the mobile phone, wherein each mobile phone of a plurality of mobile phones receives a unique challenge-response pair of the plurality of unique challenge-response pairs;
storing the first unique challenge-response pair of the plurality of unique challenge-response pairs in the mobile phone, the first challenge-response pair including a challenge component and a response component;
electrically connecting the phone accessory to the mobile phone via a first line; transmitting (304) the challenge component of the challenge-response pair as a challenge communication over the first line from the mobile phone to the phone accessory;
computing (308) a response communication in the phone accessory based on the challenge communication and using a hash function and a key stored in the phone accessory;
receiving (311) a response communication from the phone accessory over the first line;
comparing (312) the response communication with the response component; enabling (314) the phone accessory for use with the mobile phone based on the comparing step.

2. The method of claim 1 wherein the phone accessory is enabled for use with the mobile phone over the first line.

3. The method of claim 2 wherein the first line is a supply voltage line (226, 232).

4. The method of claim 1 wherein the phone accessory is enabled for use with the mobile phone over a second line, the second line electrically connecting the mobile phone and the phone accessory.

5. The method of claim 4 wherein the second line is a bi-directional communication line (228, 234).

6. The method of claim 1 further comprising disabling (318) the phone accessory from use with the mobile phone if the response communication does not match the response component.

7. The method of claim 1 further comprising disabling (318) the phone accessory from use with the mobile phone if the response communication is not received during the receiving step.

8. A system for authenticating a phone accessory (202) for a mobile phone (200), the system comprising:
the mobile phone and the phone accessory electrically connected to the mobile phone via a first line of a connector;
**characterized by**
the phone accessory configured to receive a challenge communication over the first line from the mobile phone, wherein the challenge communication is a challenge portion of a first unique challenge-response pair assigned to the mobile phone, the first challenge-response pair including the challenge component and a response component, wherein each mobile phone of a plurality of mobile phones is assigned a unique challenge-response pair of a plurality of unique challenge-response pairs;
the phone accessory having a processor configured to compute a response communication in the phone accessory based on the challenge communication and using a hash function and a key stored in the phone accessory, and the phone accessory configured to transmit the response communication over the first line from the phone accessory to the mobile phone;
wherein the mobile phone is configured to enable the phone accessory for use with the mobile phone based upon a comparison of the received response communication and the response component.

9. The system of claim 8 further configured so that, the challenge communication is transmitted over the first line from the mobile phone to the phone accessory;
a response communication is received over the first line from the phone accessory; and
the received response communication and the response component of the first challenge-response pair are compared in the mobile.

10. The system of claim 8 wherein the phone accessory is configured to be enabled for use with the mobile phone over the first line.

11. The system of claim 9 wherein the first line is a supply voltage line (226, 232).

12. The system of claim 8 wherein the phone accessory is configured to be enabled for use with the mobile phone over a second line, the second line electrically connecting the mobile phone and the phone accessory.

13. The system of claim 11 wherein the second line is a bi-directional communication line (228, 234).

14. The system of claim 8 wherein the challenge communication is one of a random number and a pseudo random number.

15. The system of claim 9 wherein the phone accessory is configured to be disabled from use with the mobile phone if the response communication does not match the response component.

16. The system of claim 9 wherein the phone accessory is configured to be disabled from use with the mobile phone if the response communication is not received from the phone accessory.

## Patentansprüche

1. Ein Verfahren zum Authentifizieren eines Telefonzubehörs (202) für ein Mobiltelefon (200), wobei das Verfahren **gekennzeichnet ist durch**:
Zuweisen eines ersten einzigartigen Herausforderung-Antwort-Paares aus einer Mehrzahl von einzigartigen Herausforderung-Antwort-Paaren an das Mobiltelefon, wobei jedes Mobiltelefon aus einer Mehrzahl von Mobiltelefonen ein einzigartiges Herausforderung-Antwort-Paar aus der Mehrzahl von einzigartigen Herausforderung-Antwort-Paaren empfängt,
Speichern des ersten einzigartigen Herausforderung-Antwort-Paares aus der Mehrzahl von einzigartigen Herausforderung-Antwort-Paaren in dem Mobiltelefon, wobei das erste Herausforderung-Antwort-Paar eine Herausforderungskomponente und eine Antwortkomponente aufweist,
elektrisches Verbinden des Telefonzubehörs mit dem Mobiltelefon über eine erste Leitung,
Senden (304) der Herausforderungskomponente des Herausforderung-Antwort-Paares als eine Herausforderungskommunikation von dem Mobiltelefon über die erste Leitung an das Telefonzubehör,
Berechnen (308) einer Antwortkommunikation in dem Telefonzubehör auf der Grundlage der Herausforderungskommunikation und mittels einer Hash-Funktion und eines Schlüssels, der in dem Telefonzubehör gespeichert ist,
Empfangen (311) einer Antwortkommunikation von dem Telefonzubehör über die erste Leitung,
Vergleichen (312) der Antwortkommunikation mit der Antwortkomponente,
Freigeben (314) des Telefonzubehörs für die Nutzung mit dem Mobiltelefon auf der Grundlage des Vergleichsschrittes.

2. Das Verfahren gemäß Anspruch 1, wobei das Telefonzubehör für die Nutzung mit dem Mobiltelefon über eine erste Leitung freigegeben wird.

3. Das Verfahren gemäß Anspruch 2, wobei die erste Leitung eine Versorgungsspannungsleitung (226, 232) ist.

4. Das Verfahren gemäß Anspruch 1, wobei das Telefonzubehör für die Nutzung mit dem Mobiltelefon über eine zweite Leitung freigegeben wird, wobei die zweite Leitung das Mobiltelefon und das Telefonzubehör elektrisch miteinander verbindet.

5. Das Verfahren gemäß Anspruch 4, wobei die zweite Leitung eine bidirektionale Kommunikationsleitung (228, 234) ist.

6. Das Verfahren gemäß Anspruch 1, ferner das Sperren (318) des Telefonzubehörs für die Nutzung mit dem Mobiltelefon aufweisend, wenn die Antwortkommunikation nicht mit der Antwortkomponente übereinstimmt.

7. Das Verfahren gemäß Anspruch 1, ferner das Sperren (318) des Telefonzubehörs für die Nutzung mit dem Mobiltelefon aufweisend, wenn die Antwortkommunikation nicht während des Empfangsschrittes empfangen wird.

8. Ein System zum Authentifizieren eines Telefonzubehörs (202) für ein Mobiltelefon (200), wobei das System aufweist:
das Mobiltelefon und das Telefonzubehör, das über eine erste Leitung eines Steckverbinders elektrisch mit dem Mobiltelefon verbunden ist,
**dadurch gekennzeichnet, dass**
das Telefonzubehör zum Empfangen einer Herausforderungskommunikation von dem Mobiltelefon über die erste Leitung eingerichtet ist, wobei die Herausforderungskommunikation ein Herausforderungsteil eines ersten einzigartigen Herausforderung-Antwort-Paares ist, das dem Mobiltelefon zugewiesen ist, wobei das erste Herausforderung-Antwort-Paar die Herausforderungskomponente und eine Antwortkomponente aufweist, wobei jedes Mobiltelefon aus einer Mehrzahl von Mobiltelefonen einem einzigartigen Herausforderung-Antwort-Paar aus einer Mehrzahl von einzigartigen Herausforderung-Antwort-Paaren zugewiesen ist,
das Telefonzubehör einen Prozessor aufweist, der eingerichtet ist zum Berechnen einer Antwortkommunikation in dem Telefonzubehör auf der Grundlage der Herausforderungskommunikation und mittels einer Hash-Funktion und eines Schlüssels, der in dem Telefonzubehör gespeichert ist, und das Telefonzubehör zum Senden der Antwortkommunikation über die erste Leitung von dem Telefonzubehör an das Mobiltelefon eingerichtet ist,
wobei das Mobiltelefon zum Freigeben des Telefonzubehörs für die Nutzung mit dem Mobiltelefon auf der Grundlage eines Vergleichs der empfangenen Antwortkommunikation mit der Antwortkomponente eingerichtet ist.

9. Das System gemäß Anspruch 8, das ferner derart eingerichtet ist, dass die Herausforderungskommunikation von dem Mobiltelefon über die erste Leitung an das Telefonzubehör gesendet wird,
eine Antwortkommunikation von dem Telefonzubehör über die erste Leitung empfangen wird, und
die empfangene Antwortkommunikation und die Antwortkomponente des ersten Herausforderung-Antwort-Paares in dem Mobiltelefon miteinander verglichen werden.

10. Das System gemäß Anspruch 8, wobei das Telefonzubehör zum Freigeben für die Nutzung mit dem Mobiltelefon über die erste Leitung eingerichtet ist.

11. Das System gemäß Anspruch 9, wobei die erste Leitung eine Versorgungsspannungsleitung (226, 232) ist.

12. Das System gemäß Anspruch 8, wobei das Telefonzubehör zum Freigeben für die Nutzung mit dem Mobiltelefon über eine zweite Leitung eingerichtet ist, wobei die zweite Leitung das Mobiltelefon und das Telefonzubehör elektrisch miteinander verbindet.

13. Das System gemäß Anspruch 11, wobei die zweite Leitung eine bidirektionale Kommunikationsleitung (228, 234) ist.

14. Das System gemäß Anspruch 8, wobei die Herausforderungskommunikation eine von einer Zufallszahl und einer Pseudozufallszahl ist.

15. Das System gemäß Anspruch 9, wobei das Telefonzubehör zum Sperren der Nutzung mit dem Mobiltelefon eingerichtet ist, wenn die Antwortkommunikation nicht mit der Antwortkomponente übereinstimmt.

16. Das System gemäß Anspruch 9, wobei das Telefonzubehör zum Sperren der Nutzung mit dem Mobiltelefon eingerichtet ist, wenn die Antwortkommunikation von dem Telefonzubehör nicht empfangen wird.

## Revendications

1. Procédé destiné à authentifier un accessoire de téléphone (202) d'un téléphone mobile (200), le procédé étant **caractérisée par** les étapes consistant à :
attribuer au téléphone mobile une première paire unique identification - réponse parmi une pluralité de paires uniques identification - réponse, dans lequel chaque téléphone mobile parmi une pluralité de téléphones mobiles reçoit une paire unique identification - réponse parmi la pluralité de paires uniques identification - réponse ;
stocker la première paire unique identification - réponse de la pluralité de paires uniques identification - réponse dans le téléphone mobile, la première paire identification - réponse comprenant une composante d'identification et une composante de réponse ;
connecter de manière électrique l'accessoire de téléphone au téléphone mobile par l'intermédiaire d'une première ligne ;
transmettre (304) la composante d'identification de la paire identification - réponse en tant que communication d'identification sur la première ligne à partir du téléphone mobile vers l'accessoire de téléphone ;
calculer (308) une communication de réponse dans l'accessoire de téléphone sur la base de la communication d'identification et utiliser une fonction de hachage et une clé stockée dans l'accessoire de téléphone ;
recevoir (311) une communication de réponse en provenance de l'accessoire de téléphone sur la première ligne ;
comparer (312) la communication de réponse et la composante de réponse ;
autoriser (314) l'utilisation de l'accessoire de téléphone avec le téléphone mobile sur la base de l'étape de comparaison.

2. Procédé selon la revendication 1, dans lequel l'utilisation de l'accessoire de téléphone est autorisée avec le téléphone mobile sur la première ligne.

3. Procédé selon la revendication 2, dans lequel la première ligne est une ligne de tension d'alimentation (226, 232).

4. Procédé selon la revendication 1, dans lequel l'utilisation de l'accessoire de téléphone est autorisée avec le téléphone mobile sur une seconde ligne, la seconde ligne connectant de manière électrique le téléphone mobile et l'accessoire de téléphone.

5. Procédé selon la revendication 4, dans lequel la seconde ligne est une ligne de communication bidirectionnelle (228, 234).

6. Procédé selon la revendication 1, comprenant en outre une étape consistant à interdire (318) l'utilisation de l'accessoire de téléphone avec le téléphone mobile si la communication de réponse ne correspond pas à la composante de réponse.

7. Procédé selon la revendication 1, comprenant en outre une étape consistant à interdire (318) l'utilisation de l'accessoire de téléphone avec le téléphone mobile si la communication de réponse n'est pas reçue au cours de l'étape de réception.

8. Système destiné à authentifier un accessoire de téléphone (202) d'un téléphone mobile (200), le système comprenant :
le téléphone mobile et l'accessoire de téléphone connecté de manière électrique au téléphone mobile par l'intermédiaire d'une première ligne d'un connecteur ;
**caractérisé en ce que** :
l'accessoire de téléphone est configuré de façon à recevoir une communication d'identification sur la première ligne en provenance du téléphone mobile, dans lequel la communication d'identification est une partie d'identification d'une première paire unique identification - réponse attribuée au téléphone mobile, la première paire identification - réponse comprenant une composante d'identification et une composante de réponse, dans lequel chaque téléphone mobile parmi une pluralité de téléphones mobiles se voit attribuer une paire unique identification - réponse parmi une pluralité de paires uniques identification - réponse ;
l'accessoire de téléphone présente un processeur configuré de façon à calculer une communication de réponse dans l'accessoire de téléphone sur la base de la communication d'identification, et utilise une fonction de hachage et une clé stockée dans l'accessoire de téléphone, et l'accessoire de téléphone est configuré de façon à transmettre au téléphone mobile la communication de réponse sur la première ligne de l'accessoire de téléphone ;
dans lequel le téléphone mobile est configuré de façon à autoriser l'utilisation de l'accessoire de téléphone avec le téléphone mobile sur la base d'une comparaison de la communication de réponse reçue et de la composante de réponse.

9. Système selon la revendication 8, configuré en outre de telle sorte que :
la communication d'identification soit transmise sur la première ligne à partir du téléphone mobile vers l'accessoire de téléphone ;
une communication de réponse soit reçue sur la première ligne en provenance de l'accessoire de téléphone ; et
la communication de réponse reçue et la composante de réponse de la première paire identification - réponse soient comparées dans le mobile.

10. Système selon la revendication 8, dans lequel l'accessoire de téléphone est configuré de façon à ce que son utilisation soit autorisée avec le téléphone mobile sur la première ligne.

11. Système selon la revendication 9, dans lequel la première ligne est une ligne de tension d'alimentation (226, 232).

12. Système selon la revendication 8, dans lequel l'accessoire de téléphone est configuré de façon à ce que son utilisation soit autorisée avec le téléphone mobile sur une seconde ligne, la seconde ligne connectant de manière électrique le téléphone mobile et l'accessoire de téléphone.

13. Système selon la revendication 11, dans lequel la seconde ligne est une ligne de communication bidirectionnelle (228, 234).

14. Système selon la revendication 8, dans lequel la communication d'identification est l'une d'un nombre aléatoire et d'un nombre pseudo-aléatoire.

15. Système selon la revendication 9, dans lequel l'accessoire de téléphone est configuré de façon à ce que son utilisation soit interdite avec le téléphone mobile si la communication de réponse ne correspond pas à la composante de réponse.

16. Système selon la revendication 9, dans lequel l'accessoire de téléphone est configuré de façon à ce que son utilisation soit interdite avec le téléphone mobile si la communication de réponse n'est pas reçue en provenance de l'accessoire de téléphone.
